# EUROPÄISCHE PATENTSCHRIFT

(11) **EP 2 535 600 B1**
(45) Veröffentlichungstag und Bekanntmachung des Hinweises auf die Patenterteilung: **21.08.2013**
(21) Anmeldenummer: 11170213.0
(22) Anmeldetag: 16.06.2011
(51) Int. Cl.: F15B 13/044, F16K 27/00, F16K 31/06

(54) **Wegeventil**
Proportional valve
Vanne proportionnelle

(43) Veröffentlichungstag der Anmeldung: 19.12.2012
(73) Patentinhaber: HAWE Hydraulik SE, 81673 München (DE)
(72) Erfinder: Neumair, Georg, 85402 Thalhausen (DE); Zwingler, Engelbert, 85625 Baiern / Antholing (DE); Heusser, Martin, 81245 München (DE)
(74) Vertreter: Grünecker, Kinkeldey, Stockmair & Schwanhäusser

(56) Entgegenhaltungen:
- EP-A1- 1 564 465
- DE-A1-102009 017 864
- DE-B- 1 085 736
- DE-U1-202009 001 691
- US-A- 4 494 572
- US-A- 5 275 201

## Beschreibung

Die Erfindung betrifft ein Wegeventil gemäß Oberbegriff des Patentanspruchs 1.

In dem aus EP 1 853 839 A bekannten Wegeventil sind in einem Gehäuse für eine 4/3-Wege-Ventilfunktion vier baugleiche 2/2-Wege-Sitzventileinsätze angeordnet, wobei die Aufnahmebohrungen untereinander gleich und jeweils auf die Dimensionierung eines 2/2-Sitzventileinsatzes abgestimmt sind. Jeweils ein Paar 2/2-Ventileinsätze wird durch einen von zwei an voneinander abgewandten Magnetmontierseiten des Gehäuses angebrachten Magneten gleichzeitig betätigt. Die Magneten sind wahlweise einzeln oder gemeinsam bestrombar verschaltet. Um mit demselben Gehäuse wahlweise eine 4/2-Wegefunktion oder eine 3/3-Wegefunktion zu erzielen, kann mit einem Bausatz aus 2/2-Sitzventileinsätzen, Blindbuchsen bzw. Verschlussplatten die Bestückung des Gehäuses geändert werden, so dass beispielsweise für eine 4/2-Wegefunktion nur zwei 2/2-Sitzventileinsätze und zwei Blindbuchsen und/oder Verschlussplatten und für eine 3/3-Wegefunktion nur zwei 2/2-Sitzventileinsätze und zwei Blindbuchsen und/oder Verschlussplatten und gegebenenfalls nur ein Magnet montiert werden. Maximal ist nur eine 4/3-Wege-Ventilfunktion zu erzielen.

Aus DE 20 2009 001 691 U ist ein Wegeventil für Kaffeeautomaten bekannt, das in einem Gehäuse zwei Zweistellungs-Sitzventileinsatz-Aufnahmebohrungen aufweist, die an voneinander abgewandten Magnetmontierseiten münden und jeweils einen 3/2-Sitzventileinsatz enthalten. Die Aufnahmebohrungen sind über innenliegende Kanäle miteinander verbunden. Eine Aufnahmebohrung ist an einen Einlasskanal angeschlossen und führt zu einem Auslasskanal. Die andere Aufnahmebohrung kommuniziert mit der einen Aufnahmebohrung und ist an zwei Auslasskanäle angeschlossen. An jeder Magnetmontierseite ist ein Magnet von insgesamt zwei Magneten angebracht. Die Magneten können einzeln und gemeinsam bestromt werden. Mit dem Wegeventil wird eine Vierwege/Dreistellungs-Ventilfunktion erzielt. Sind beide Magneten unbestromt, ist der Einlasskanal mit einem Auslasskanal verbunden. Ist ein Magnet bestromt, während der andere unbestromt bleibt, ist der Einlasskanal mit einem anderen Auslasskanal verbunden. Werden beide Magneten gleichzeitig bestromt, ist der Einlasskanal mit dem dritten Auslasskanal verbunden.

Aus EP 1 564 465 A ist ein Wegeventil mit einer Vierwege/Zweistellungs-Ventiffunktion (Fig. 1) oder einer Sechswege/Zweistellungs-Ventilfunktion (Fig: 1a) bekannt, in dessen Gehäuse in zwei identischen Aufnahmebohrungen als Paar entweder zwei identische 2/2-Wege-Sitzventileinsätze oder 3/2-Wege-Sitzventileinsätze montiert sind, die jeweils gemeinsam von dem einzigen an einer Magnetmontierseite des Gehäuse montierten Magneten gegen Federbelastung betätigt werden.

Bei dem aus EP 0 527 393 A bekannten Wegeventil sind zwei Gehäuse jeweils mit einem Magneten hydraulisch parallel geschaltet. In jedem Gehäuse sind in zwei identischen Aufnahmebohrungen zwei 2/2-Wege-Sitzventileinsätze montiert, die der Magnet gemeinsam betätigt. Jedes Gehäuse weist zwei Verbraucheranschlüsse, einen Druckanschluss und einen Tankanschluss auf.

Der Erfindung liegt die Aufgabe zugrunde, ein Wegeventil der eingangs genannten Art zu schaffen, das auf baulich einfache Weise eine höherrangige Mehrwege-Mehrstellungs-Ventilfunktion ermöglicht.

Die gestellte Aufgabe wird mit den Merkmalen des Patentanspruchs 1 gelöst.

Durch die Kombination zweier Paare jeweils aus einem 2/2-Wege-Sitzventileinsatz und einem 3/2-Wege-Sitzventileinsatz, die paarweise gemeinsam durch einen Magneten betätigbar sind, und durch die Verschaltung der beiden Magneten, derart, dass diese wahlweise einzeln oder gemeinsam bestrombar sind, lässt sich mit baulich geringem Aufwand in einem Gehäuse eine4/4-Wege-Ventilfunktion erzielen. Mit dem gleichen Gehäuse können, wie an sich bekannt, durch Änderung der Bestückung auch andere Mehrwege-Mehrstellungs-Ventilfunktionen erzielt werden.

Das Gehäuse ist zweckmäßig einteilig, könnte aber auch aus zwei miteinander verbundenen, zumindest im Wesentlichen identischen Gehäuseteilen erstellt werden, zwischen denen die für die Vierwege-Vierstellungs-Ventilfunktion erforderlichen Strömungswege entsprechend verbunden sind.

Bei einer zweckmäßigen Ausführungsform sind die Verbraucheranschlüsse an die die 3/2-Sitzventileinsätze enthaltenden Aufnahmebohrungen angeschlossen, wobei der jeweilige 3/2-Sitzventileinsatz durch einen der zwei Magneten betätigbar ist. Dabei werden bei gemeinsam bestromten Magneten beide Verbraucheranschlüsse miteinander und gemeinsam mit dem Druckanschluss verbunden und gemeinsam zum Tankanschluss blockiert. Auf diese Weise lässt sich bei gemeinsam bestromten Magneten eine hydraulische Blockierung zwischen den Verbraucheranschlüssen oder, gegebenenfalls, eine gemeinsame Druckbeaufschlagung der Verbraucheranschlüsse ohne Abströmmöglichkeit zum Tank einstellen. Alternativ werden bei gemeinsam bestromten Magneten beide Verbraucheranschlüsse miteinander und gemeinsam mit dem Tankanschluss verbunden und gemeinsam zum Druckanschluss blockiert. In diesem Fall sind die beiden Verbraucheranschlüsse sozusagen in eine Schwimmstellung geschaltet, falls sie einem gemeinsamen Verbraucher angehören, oder werden zwei Verbraucher über das Wegeventil gleichzeitig zum Tank entlastet.

Bei der Ausführungsform, welche bei gemeinsam bestromten Magneten beide Verbraucheranschlüsse miteinander und gemeinsam mit dem Druckanschluss verbindet, ist es zweckmäßig, wenn der Druckanschluss über einen Strömungsweg im Gehäuse gemeinsam mit den die 3/2-Sitzventileinsätze enthaltenden Aufnahmebohrungen verbunden ist, und der Tankanschluss über einen weiteren Strömungsweg im Gehäuse gemeinsam mit den die 2/2-Sitzventileinsätze enthaltenden Aufnahmebohrungen verbunden ist, und die den von einem Magneten betätigbaren 2/2-Sitzventileinsatz enthaltende Aufnahmebohrung über weitere Strömungswege im Gehäuse mit der den vom jeweils anderen Magneten betätigbaren, den 3/2-Sitzventileinsatz enthaltenden Aufnahmebohrung verbunden ist. Daraus resultiert die 4/4-Wegefunktion dadurch, dass bei stromlosem Magneten die Verbraucheranschlüsse und der Tankanschluss wie auch der Druckanschluss blockiert sind, bei einem bestromten Magneten ein Verbraucheranschluss mit dem Druckanschluss verbunden und vom Tankanschluss abgesperrt und der andere Verbraucher mit dem Tankanschluss verbunden und vom Druckanschluss abgesperrt ist, bei Bestromung des anderen Magneten der andere Verbraucheranschluss mit dem Druckanschluss verbunden und vom Tankanschluss abgesperrt hingegen der eine Verbraucheranschluss mit dem Tankanschluss verbunden und vom Druckanschluss abgesperrt ist, und schließlich bei gleichzeitiger Bestromung der beiden Magneten beide Verbraucheranschlüsse mit dem Druckanschluss verbunden und vom Tankanschluss abgesperrt sind.

Die vorerwähnte 4/4-Wegeventilfunktion lässt sich zweckmäßig dann modifizieren, wenn die Druck- und Tankanschlüsse jeweils zum wahlweisen vertauschbaren Anschließen einer Druck- oder einer Tankleitung ausgebildet sind, so dass am Wegeventil der Druckanschluss und der Tankanschluss ihre Funktionspositionen tauschen. Daraus ergibt sich bei gemeinsam bestromten Magneten eine Verbindung beider Verbraucheranschlüsse mit dem Tankanschluss, und die Separierung beider Verbraucheranschlüsse vom Druckanschluss, wie auch die Isolierung des Druckanschlusses.

Die Verwendung der Sitzventileinsätze führt zu dem in vielen hydraulischen Schaltungen wichtigen Vorteil, dass zumindest in stromlosem Zustand beider Magneten die Verbraucheranschlüsse, der Druckanschluss und der Tankanschluss jeweils leckagefrei abgesperrt sind, und in anderen Schaltstellungen zumindest ein jeweils nicht benötigter Anschluss leckagefrei abgesperrt ist.

Bei einer weiteren zweckmäßigen Ausführungsform betätigt jeder bestromte Magnet gemeinsam das Paar aus den 2/2- und 3/2-Sitzventileinsätzen, die Betätigungsstößel aufweisen, über einen Stößelteller oder Stößelbalken gemeinsam. Daraus resultiert eine erhebliche bauliche Vereinfachung des Wegeventils.

Bei einer weiteren zweckmäßigen Ausführungsform ist das Gehäuse oder jeder der Gehäuseteile aus Stahl hergestellt und spanend bearbeitet. Diese Materialauswahl führt dazu, dass das Wegeventil selbst bei kompaktem Gehäuse bis zu extremen Arbeitsdrücken verwendbar ist, beispielsweise bis zu Arbeitsdrücken von 500 bar oder mehr. Das Gehäuse kann quaderförmig sein. Die je zwei Aufnahmebohrungen sind in den zwei sich gegenüberliegenden Magnetmontierseiten des Quaders platziert, und zwar im Querschnitt des Quaders diagonal, und an den beiden Magnetmontierseiten zueinander versetzt. Auf diese Weise lässt sich bei kompakten Abmessungen des Gehäuses der Rauminhalt des Qua-ders optimal nutzen, wobei zwischen den druckführenden Strömungswegen und Aufnahmebohrungen genügend Fleisch vorhanden ist.

Anhand der Zeichnungen werden Ausführungsformen des Erfindungsgegenstandes erläutert. Es zeigen:
- Fig. 1: eine Seitenansicht eines erfindungsgemäßen Wegeventils,
- Fig. 2: eine Stirnansicht zu Fig. 1,
- Fig. 3: einen Teilschnitt des bestückten Gehäuses des Wegeventils,
- Fig. 4: ein Blockschaltbild der 4/4-Wegeventilfunktion des Wegeventils in vereinfachter Symbolik,
- Fig. 5: ein Blockschaltbild zu Fig. 4 in aufgelöster Symbolik,
- Fig. 6: ein Blockschaltbild einer anderen Ausführungsform der 4/4-Wegeventilfunktion in vereinfachter Symbolik, und
- Fig. 7: das Blockschaltbild von Fig. 6 in aufgelöster Symbolik.

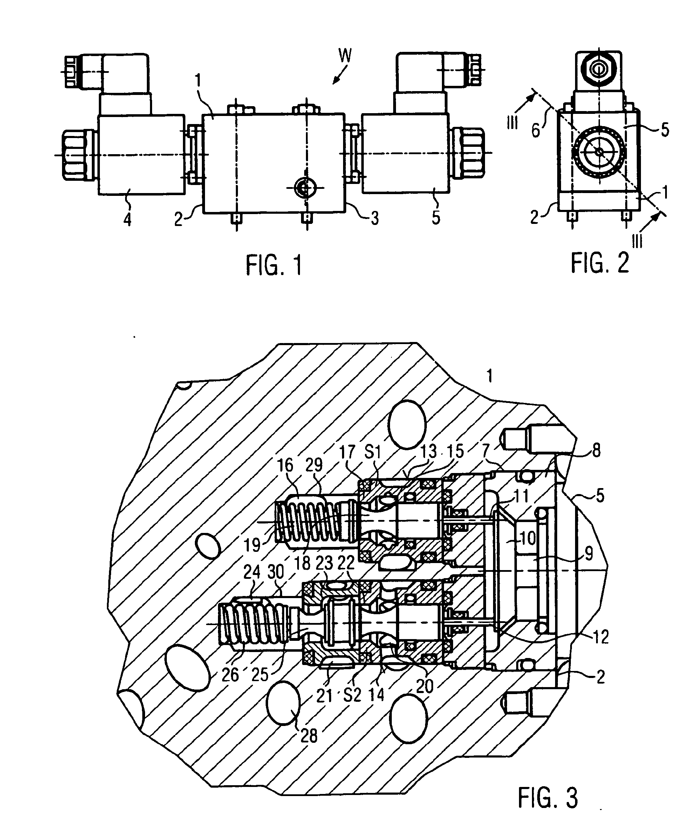

Ein in den Fig. 1 und 2 in zwei Ansichten dargestelltes Wegeventil W dient beispielsweise zum Bereitstellen einer 4/4-Wege-Ventilfunktion. Das Wegeventil W hat ein Gehäuse 1 (quaderförmiger Stahlblock, spanend bearbeitet), zwei Magneten 4, 5 (beispielsweise Schwarz/Weiß-Schaltmagneten), die an sich gegenüberliegenden Magnetmontierseiten 2, 3 des Gehäuses 1 montiert sind, und am Gehäuse angeordneten Anschlüsse, nämlich zwei Verbraucheranschlüssen A, B, einen Druckanschluss P und einen Tankanschluss T.

In Fig. 2 ist in der Stirnansicht eine Diagonalebene 6 des Gehäuses 1 angedeutet, in der anhand von Fig. 3 (Schnittebene III - III in Fig. 2) erläuterte, zur Magnetmontierseite 2 offene Aufnahmebohrungen 13, 14 platziert sind.

Gemäß Fig. 3 (Schnitt einer Hälfte des Gehäuses 1) ist an der Magnetmontierseite 2 des Gehäuses 1 z.B. eine zentrische Aufnahmebohrung 7 für einen Ringeinsatz 8 geformt, an welchem der Magnet 5 angesetzt ist, von welchen sich ein Ankerstößel 9 zu einem Stößelteller 10 oder Stößelbalken erstreckt, der zwei beabstandete, zueinander parallele Betätigungsstößel 11, 12 gemeinsam zu betätigen vermag.

Ausgehend von der Aufnahmebohrung 7 erstrecken sich an jeder Magnetmontierseite 2, 3 die zwei getrennten Aufnahmebohrungen 13, 14 (Stufenbohrungen) in das Gehäuse 1, so dass das Gehäuse insgesamt vier Aufnahmebohrungen 13, 14 aufweist. Die Aufnahmebohrung 13 ist in der gezeigten Ausführungsform kürzer als die Aufnahmebohrung 14. Jede Aufnahmebohrung 13, 14 führt zu einem im Durchmesser verkleinerten Endabschnitt 29 bzw. 30, in welchem ein Anschluss 16, 24 eines im Gehäuse 1 beispielsweise gebohrten Strömungswegs (in Fig. 3 allgemein bei 28 angedeutet) platziert ist.

In der gezeigten Ausführungsform ist in Fig. 3 in der Aufnahmebohrung 13 ein 2/2-Sitzventileinsatz S1 montiert, während in der Aufnahmebohrung 14 ein 3/2-Sitzventileinsatz S2 montiert ist. Der 2/2-Sitzventileinsatz weist einen Anschluss 15 zu einem nicht näher hervorgehobenen Strömungsweg im Gehäuse 1 auf, sowie einen Ventilsitz 17, der mit einem axial verstellbaren Ventilkegel 18 zusammenarbeitet, welcher durch eine Feder 19 in Schließrichtung beaufschlagt ist. In der in Fig. 3 gezeigten Stellung ist unter der Kraft der Feder 19 der Anschluss 16 vom Anschluss 15 leckagefrei blockiert. Der Magnet 5 ist nicht bestromt. Wird hingegen der Magnet 5 bestromt, dann wird über den Betätigungsstößel 11 der Ventilkegel 18 gegen die Kraft der Feder 19 vom Ventilsitz 17 abgehoben, so dass die Anschlüsse 15, 16 miteinander verbunden sind.

Der in der jeweiligen Aufnahmebohrung 14 montierte 3/2-Sitzventileinsatz S2 weist zwei Anschlüsse 21, 20 auf, die durch einen Ventilsitz 22 voneinander getrennt sind, wobei der Anschluss 21 über einen weiteren Ventilsitz 23 mit dem Anschluss 24 verbindbar ist. Zwischen den Ventilsitzen 22, 23 ist ein Ventilkegel 25 mit zwei (z.B. konischen) Sitzflächen durch die Feder 26 bzw. den Magneten 5 über den Betätigungsstößel 12 hin- und herverstellbar. In der gezeigten Stellung in Fig. 3 wird durch die Kraft der Feder 26 der Anschluss 20 vom Anschluss 21 separiert, während der Anschluss 21 mit dem Anschluss 24 verbunden ist. Wird der Magnet bestromt, dann wird über den Sitz 23 der Anschluss 21 vom Anschluss 24 getrennt, hingegen der Anschluss 21 mit dem Anschluss 20 verbunden.

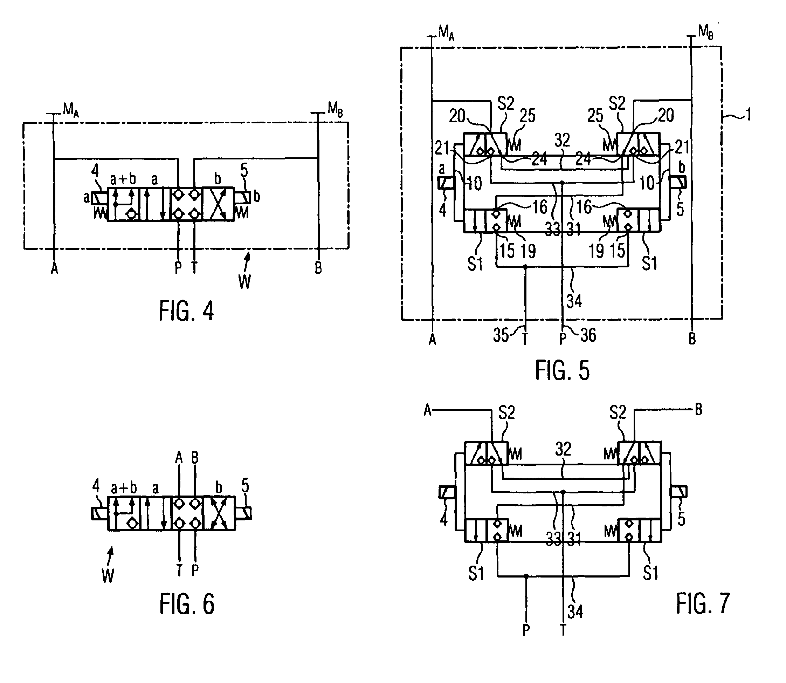

Die Anordnung der Aufnahmebohrungen 13, 14 mit den darin montierten 2/2- und 3/2-Sitzventileinsätzen S1, S2 ist an der anderen Magnetmontierseite um 90° versetzt, wobei die in Fig. 3 nur allgemein angedeuteten Strömungswege 28 bestimmte innenliegende Verbindungen zwischen den Aufnahmebohrungen herstellen, die anhand der Fig. 5 und 7 näher erläutert werden.

Unter der Annahme, dass der jeweilige Anschluss 21 jedes 3/2-Sitzventileinsatzes S2 mit dem Druckanschluss P verbunden ist, der jeweilige Anschluss 20 mit einem Verbraucheranschluss A oder B verbunden ist, und der jeweilige Anschluss 21 mit der Aufnahmebohrung 13 des 2/2-Sitzventileinsatzes S1 verbunden ist, der vom anderen Magneten 4 oder 5 betätigbar ist, wird mit dem Wegeventil eine 4/4-Wege-Ventilfunktion erzielt, die anhand der Fig. 4 und 5 näher erläutert wird.

In Fig. 4 ist mit vereinfachter Symbolik dargestellt, dass das Wegeventil W vier Schaltstellungen einnehmen kann, nämlich eine Schaltstellung bei unbestromten Magneten 4, 5 (zweite von rechts), in der die Verbraucheranschlüsse A, B und der Druckanschluss P wie auch der Tankanschluss T leckagefrei blockiert sind, eine Schaltstellung b mit Bestromung nur des Magneten 5, in der der Verbraucheranschluss A mit dem Tankanschluss T verbunden ist, hingegen der Verbraucheranschluss B mit dem Druckanschluss P, eine Schaltstellung a bei Bestromung nur des Magneten 4, in der der Verbraucheranschluss A mit dem Druckanschluss P und der Verbraucheranschluss B mit dem Tankanschluss T verbunden sind, und schließlich eine Schaltstellung a+b bei gleichzeitiger Bestromung beider Magneten 4, 5, in welcher beide Verbraucheranschlüsse A, B miteinander und gemeinsam mit dem Druckanschluss P verbunden sind, während beide Verbraucheranschlüsse A, B gegenüber dem Tankanschluss T und der Tankanschluss T ebenfalls blockiert sind.

In der aufgelösten schematischen Symboldarstellung in Fig. 5 ist erkennbar, dass im Gehäuse 1 vom Anschluss 21 der den 3/2-Sitzventileinsatz S2 enthaltenden Aufnahmebohrung, die zum Magneten 4 gehört, ein Strömungsweg 33 zum Anschluss 21 des dem Magneten 5 zugeordneten 3/2-Sitzventileinsatzes S2 in der anderen Aufnahmebohrung führt, und dieser Strömungsweg 33 mit dem Druckanschluss P verbunden ist, an welchem beispielsweise eine Druckleitung 36 angeschlossen wird. Der Anschluss 24 der den 3/2-Sitzventileinsatz S2 des Magneten 4 enthaltenden Aufnahmebohrung ist über einen Strömungsweg 32 mit dem Anschluss 16 der den 2/2-Sitzventileinsatz S1 des anderen Magneten 5 enthaltenden Aufnahmebohrung verbunden. Der Anschluss 24 in der den 3/2-Sitzventileinsatz S2 des Magneten 5 enthaltenden Aufnahmebohrung ist über einen Strömungsweg 31 mit dem Anschluss 16 der den 2/2-Sitzventileinsatz S1 des Magneten 4 enthaltenden Aufnahmebohrung verbunden. Schließlich sind die Anschlüsse 15 beider die 2/2-Sitzventileinsätze enthaltenden Aufnahmebohrungen beider Magneten 4, 5 über einen Strömungsweg 34 miteinander verbunden, an welchen der Tankanschluss T angeschlossen ist, an welchem beispielsweise eine Tankleitung 35 anschließbar ist.

Die Darstellung in Fig. 5 ist nur beispielhaft aufzufassen, da es durchaus denkbar ist, die Anschlüsse 21, 24 und gegebenenfalls 20 anders zu verschalten, als in Fig. 5 angedeutet.

Von der Erfindung ist es ferner mitumfasst, andere, einfachere Ventilfunktionen des Wegeventils W beispielsweise dadurch zu erzielen, dass dasselbe Gehäuse nur mit Bestückung durch 2/2-Sitzventileinsätze zum Erzielen einer 4/3- oder 4/2- oder 3/3-Wegefunktion modifiziert wird, beispielsweise durch Weglassung einzelner 2/2-Sitzventileinsätze und/oder eines Magneten 4 oder 5 und Einsatz von Blindbuchsen, Abdeckplatten oder Stopfen im Gehäuse 1.

Ferner soll von der Erfindung mitumfasst werden, die Aufnahmebohrungen 13, 14 in jeder Gehäuseseite nicht unterschiedlich auszubilden, sondern nur gleiche Aufnahmebohrungen 14 zu bohren und auch die Strömungswege und Anschlüsse so vorzusehen, wie dies für die Aufnahmebohrung 14 gezeigt ist. Dann können in sämtliche Aufnahmebohrungen 14 3/2-Wege-Sitzventileinsätze, wie in Fig. 3 gezeigt, eingesetzt werden, um z.B. eine 5/4-Wege-Ventilfunktion zu erzielen. In diesem Fall könnte das Wegeventil W mit vier 3/2-Sitzventileinsätzen die 5/4-Wegefunktion erfüllen, wohingegen, falls nur eine 4/4-Wegefunktion benötigt wird, wie gezeigt, in die dann mit kürzeren 2/2-Sitzventileinsätzen S1 bestückten Aufnahmebohrungen 14 Blindbuchsen eingesetzt werden, die den Platzüberschuss ausfüllen und bestimmte Strömungswege blockieren und/oder trennen. Alternativ könnten nur Stopfen in Bohrungsmündungen eingebracht werden. Eine 5/4-Wegefunktion kann beispielsweise zweckmäßig sein, wenn zwei getrennt beaufschlagbare Druckanschlüsse vorgesehen sind. Die modulare Modifizierbarkeit des Wegeventils mit Blindbuchsen, Stopfen, Verschlussplatten und dgl. zur auch wahlweisen Schaffung von 4/3-, 3/3- oder 4/2-Wegeventilfunktionen ist auch dann gegeben.

Der Druckanschluss P und der Tankanschluss T können so gestaltet sein, dass die jeweilige Tankleitung 35 oder Druckleitung 36 wahlweise an jedem Anschluss angeschlossen werden kann. So kann z.B. die in der Ausführungsform von Fig. 6, 7 gegebene 4/4-Wege-Ventilfunktion erzielt sein, bei der in einer Schaltstellung (gleichzeitige Bestromung a+b beider Magneten 4, 5) die beiden Verbraucheranschlüsse A, B miteinander und gemeinsam mit dem Tankanschluss T verbunden sind, während der Druckanschluss P leckagefrei abgesperrt ist. Die weitere Verschaltung dieser Ausführungsvariante entspricht der von Fig. 3. Die vier Stellungen ergeben sich dadurch, dass in stromlosem Zustand beider Magneten 4, 5 beide Verbraucheranschlüsse A, B wie auch der Druckanschluss P und der Tankanschluss T leckagefrei abgesperrt sind, bei Bestromung b nur des Magneten 5 der Verbraucheranschluss A mit dem Druckanschluss P verbunden ist, während der Verbraucheranschluss B mit dem Tankanschluss T verbunden ist, bei Bestromung a nur des Magneten 4 der Verbraucheranschluss A mit dem Tankanschluss T und der Verbraucheranschluss B mit dem Druckanschluss P verbunden sind, und bei gleichzeitiger Bestromung a+b beider Magneten 4, 5 die Verbraucheranschlüsse A, B miteinander und gemeinsam mit dem Tankanschluss T verbunden sind, während der Druckanschluss P leckagefrei abgesperrt ist. Dies wäre beispielsweise bei einem doppelseitig beaufschlagbaren Hydrozylinder eine Art Schwimmstellung.

Im Übrigen soll mit der Erfindung auch umfasst sein, die Magneten 4, 5 mit manuellen Betätigern (Notbetätigung oder alternative Handbetätigung) zu kombinieren, oder durch nur manuelle Betätiger zu ersetzen, so dass im letztgenannten Fall das Wegeventil rein manuell schaltbar ist, z.B. über Kurvensteuerungen und/oder Handhebel oder Taster.

## Patentansprüche

1. Wegeventil (W) mit Mehrwege/Mehrstellungs-Funktion, mit einem ein- oder zweiteiligen Gehäuse (1), das zwei Verbraucheranschlüsse (A, B), einen Tankanschluss (T) und einen Druckanschluss (P) zu jeweils einer von vier Zweistellungs-Sitzventileinsatz-Aufnahmebohrungen (13, 14), innenliegende Strömungswege (31 bis 34) zwischen Aufnahmebohrungen und in jeder Aufnahmebohrung (13, 14) einen Zweistellungs-Sitzventileinsatz (S1, S2) enthält, und an welchem Magnetmontierseiten (2, 3) jeweils zum Anbringen eines Magneten (4, 5) angeordnet sind, deren jeder bestromt (a+b) gleichzeitig ein Paar der Zweistellungs-Sitzventileinsätze (S1) gegen Federbelastung betätigt, wobei die beiden Magneten (4, 5) wahlweise einzeln oder gemeinsam bestrombar (a; b; a+b) verschaltet sind, **dadurch gekennzeichnet, dass** zum Bereitstellen einer VierwegeNierstellungs-Ventitfunktion des Wegeventils (W) jedes gemeinsam durch einen Magneten (4 oder 5) betätigbare Zweistellungs-Ventileinsatz-Paar (S1, S2) einen 2/2-Sitzventileinsatz (S1) und einen 3/2-Sitzventileinsatz (S2) umfasst.

2. Wegeventil nach Anspruch 1, **dadurch gekennzeichnet, dass** die Verbraucheranschlüsse (A, B) an die die 3/2-Sitzventileinsätze (S2) enthaltenden Aufnahmebohrungen (14) angeschlossen sind, und dass bei gemeinsam bestromten (a+b) Magneten (4, 5) entweder beide Verbraucheranschlüsse (A, B) miteinander und gemeinsam mit dem Druckanschluss (P) verbunden und gemeinsam zum Tankanschluss (T) blockiert, oder beide Verbraucheranschlüsse (A, B) miteinander und gemeinsam mit dem Tankanschluss (T) verbunden und gemeinsam zum Druckanschluss (P) blockiert sind.

3. Wegeventil nach Anspruch 2, **dadurch gekennzeichnet, dass** der Druckanschluss (P) über einen Strömungsweg (33) im Gehäuse (1) mit den die 3/2-Sitzventileinsätze (S2) enthaltenden Aufnahmebohrungen (14) verbunden ist, dass der Tankanschluss (T) über einen weiteren Strömungsweg (34) im Gehäuse (1) mit den die 2/2-Sitzventileinsätze (S1) enthaltenden Aufnahmebohrungen (13) verbunden ist, und dass die den von einem Magneten (4 oder 5) betätigbaren 2/2-Sitzventileinsatz (S1) enthaltenden Aufnahmebohrungen (13) über weitere Strömungswege (31, 32) im Gehäuse (1) mit der jeweils den vom jeweils anderen Magneten betätigbaren 3/2-Sitzventileinsatz (S2) enthaltenden Aufnahmebohrung (14) verbunden ist.

4. Wegeventil nach wenigstens einem der vorhergehenden Ansprüche, **dadurch gekennzeichnet, dass** zumindest in stromlosem Zustand beider Magneten (4, 5) die Verbraucheranschlüsse (A, B), der Druckanschluss (P) und der Tankanschluss (T) jeweils leckagefrei blockiert sind.

5. Wegeventil nach wenigstens einem der vorhergehenden Ansprüche, **dadurch gekennzeichnet, dass** jeder bestromte Magnet (4, 5) das Paar aus den je einen Betätigungsstößel (11, 12) aufweisenden 2/2- und 3/2-Sitzventileinsätzen (S1, S2) über einen Stößelteller oder Stößelbalken (10) gemeinsam betätigt.

6. Wegeventil nach wenigstens einem der vorhergehenden Ansprüche, **dadurch gekennzeichnet, dass** das Gehäuse (1) oder jeder von zwei Gehäuseteilen aus Stahl besteht und spanend bearbeitet ist.

## Claims

1. Multiways-valve (W) having a multiways/multipositions-function, comprising a one part or two part housing (1) containing two consumer ports (A, B), a tank port (T) and a pressure port (P), respectively extending to a respective one of four receiving bores (13, 14) accommodating two-positions-seat valve inserts, interior flow paths (31 to 34) between receiving bores, and in each receiving bore (13, 14) a two-positions-seat valve insert (S1, S2), at which housing (1) solenoid mounting sides (2, 3) are arranged respectively for attaching a solenoid (4, 5), each of which when supplied with current (a+b) simultaneously actuates one pair of the two-positions-seat valve inserts (S1) counter to a spring load, wherein both solenoids (4, 5) are switched such that they selectively can be supplied with current either alone or in common (a; b; a+b), **characterized in that** for providing a four ways/four positions-valve function of the multiways-valve (W) each pair of two-positions-valve inserts (S1, S2) commonly actuable by one solenoid (4 or 5) comprises a 2/2-seat valve insert (S1) and a 3/2-seat valve insert (S2).

2. Multiways-valve according to claim 1, **characterized in that** the consumer ports (A, B) are connected with the receiving bores (14) containing the 3/2-seat valve inserts (S2), and that when the solenoids (4, 5) commonly are supplied with current either both consumer ports (A, B) are connected with another and are commonly connected with the pressure port (P) but blocked to the tank port (T), or both consumer ports (A, B) are connected with another and are connected commonly with the tank port (T) but blocked to the pressure port (P).

3. Multiways-valve according to claim 2, **characterized in that** the pressure port (P) is connected via a flow path (33) in the housing (1) with the receiving bores (14) containing the 3/2-seat valve inserts (S2), that the tank port (P) is connected via a further flow path (34) in the housing (1) with the receiving bores (13) containing the 2/2-seat valve inserts (S1) and that the receiving bores (13) containing the 2/2-seat valve inserts (S1) actuable by one solenoid (4 or 5) are connected via a further flow path (31, 32) in the housing (1) with the receiving bore (14) containing the 3/2-seat valve insert (S2) actuable by the respective other solenoid.

4. Multiways-valve according to at least one of the preceding claims, **characterized in that** at least in current-free condition of both solenoids (4, 5), the consumer ports (A, B), the pressure port (P) and the tank ports (T) respectively are blocked in leakage-free fashion.

5. Mulitways-valve according to at least one of the preceding claims, **characterized in that** each solenoid (4, 5) when supplied with electric current commonly actuates via a plunger plates or a plunger beam (10) the pair of 2/2- and 3/2- seat valve inserts (S1, S2), each comprising an actuating plunger (11, 12).

6. Multiways-valve according to at least one of the preceding claims, **characterized in that** the housing (1) or each of two housing parts consists of steel and is machined.

## Revendications

1. Vanne de distribution (W) à fonction multivoie/multiposition, comprenant un boîtier (1) en une ou deux parties qui comporte deux connexions d'utilisateur (A, B), une connexion de réservoir (T) et une connexion sous pression (P), chacune vers l'un de quatre perçages de réception de tiroir de vanne à siège à deux positions (13, 14), des voies d'écoulement internes (31 à 34) entre les perçages de réception, et dans chaque perçage de réception (13, 14), un tiroir de vanne à siège à deux positions (S1, S2), et sur lequel des faces de montage d'électroaimant (2, 3) sont respectivement agencées pour monter des électroaimants (4, 5), chacun de ceux-ci, lorsqu'il est alimenté électriquement (a+b), actionnant simultanément une paire de tiroirs de vanne à siège à deux positions (S1) contre une contrainte exercée par un ressort, moyennant quoi les deux électroaimants (4, 5) peuvent être commandés séparément ou simultanément (a ; b ; a+b) par leur alimentation électrique, **caractérisée en ce que**, pour l'obtention d'une fonction de vanne à quatre voies ou à quatre positions de la vanne de distribution (W), chaque paire de tiroirs de vanne à deux positions (S1, S2) actionnable simultanément par un électroaimant (4 ou 5) comporte un tiroir de vanne à siège 2/2 (S1) et un tiroir de vanne à siège 3/2 (S2).

2. Vanne de distribution selon la revendication 1, **caractérisée en ce que** les connexions d'utilisateur (A, B) sont connectées aux perçages de réception (14) qui reçoivent les tiroirs de vanne à siège 3/2 (S2), et **en ce que** quand les électroaimants (4, 5) sont alimentés ensemble (a+b), soit les deux connexions d'utilisateur (A, B) sont connectées entre elles conjointement avec la connexion sous pression (P) et sont coupées ensemble de la connexion de réservoir (T), soit les deux connexions d'utilisateur (A, B) sont connectées entre elles et conjointement avec la connexion de réservoir (T) et sont coupées ensemble de la connexion sous pression (P).

3. Vanne de distribution selon la revendication 2, **caractérisée en ce que** la connexion sous pression (P) est connectée via une voie d'écoulement (33) dans le boîtier (1) avec les perçages de réception (14) qui reçoivent les tiroirs de vanne à siège 3/2 (S2), **en ce que** la connexion de réservoir (T) est connectée via une autre voie d'écoulement (34) dans le boîtier (1) avec les perçages de réception (13) qui reçoivent les tiroirs de vanne à siège 2/2 (S1), et **en ce que** les perçages de réception (13) qui reçoivent le tiroir de vanne à siège 2/2 (S1) actionnable par un électroaimant (4 ou 5) sont connectés via d'autres voies d'écoulement (31, 32) dans le boîtier (1) avec le perçage de réception (14) respectif qui reçoit le tiroir de vanne à siège 3/2 (S2) actionnable par d'autres électroaimants respectifs.

4. Vanne de distribution selon au moins l'une des revendications précédentes, **caractérisée en ce qu'**au moins en l'absence d'alimentation électrique des deux électroaimants (4, 5), les connexions d'utilisateur (A, B), la connexion sous pression (P) et la connexion de réservoir (T) sont chacune coupées sans fuite.

5. Vanne de distribution selon au moins l'une des revendications précédentes, **caractérisée en ce que** chaque électroaimant alimenté électriquement (4, 5) actionne simultanément la paire de tiroirs de vanne à siège 2/2 et 3/2 (S1, S2) comportant chacun un axe d'actionnement (11, 12), via un siège d'axe ou une barre d'axe (10).

6. Vanne de distribution selon au moins l'une des revendications précédentes, **caractérisée en ce que** le boîtier (1) ou chacune des deux parties de boîtier est réalisé en acier par usinage.
